# EUROPEAN PATENT SPECIFICATION

(11) **EP 3 074 712 B1**
(45) Date of publication and mention of the grant of the patent: **25.07.2018**
(21) Application number: 13898410.9
(22) Date of filing: 29.11.2013
(51) Int. Cl.: F41A 33/06

(54) **ARRANGEMENT FOR RECOIL SIMULATION AND WEAPON TRAINING**
ANORDNUNG FÜR RÜCKSTOSSSIMULATION UND SCHIESSÜBUNG
SYSTÈME DESTINÉ À LA SIMULATION DE RECUL ET À LA FORMATION À UNE ARME

(43) Date of publication of application: 05.10.2016
(73) Proprietor: Saab AB, 581 88 Linköping (SE)
(72) Inventor: JANDL, Martin, 68401 Slavkov u Brna (CZ); TRBOLA, Jindrich, 68301 Rousinov u Vyskova (CZ)
(74) Representative: Zacco Sweden AB
(86) International application number: PCT/SE2013/051422
(87) International publication number: WO 2015/080642

(56) References cited:
- EP-A1- 1 243 889
- EP-A1- 1 243 889
- DE-C- 939 135
- US-A- 4 480 999
- US-A1- 2005 034 596
- US-A1- 2012 148 989

## Description

### TECHNICAL FIELD

The present invention generally relates to the field of simulation and weapon training. In particular, the invention relates to a device for generating recoil or hammer cocking in a weapon comprising a barrel or barrel replica.

### BACKGROUND ART

Firearms are among others used by police and military. Often the firearms are not used very often and there is therefore a need for weapon training in order to keep skills up to date. Weapon training has often been accomplished with live ammunition at targets in specific firing range areas. One disadvantage of this procedure is the cost of the ammunition used.

Another disadvantage is that firing ranges require space, are not easily accessible and can often only be used in daylight. Further, live ammunition requires that hearing protectors are worn.

Today there are also simulated weapons provided with laser beams. The laser beams are detected by targets. One disadvantage with simulated weapons are that they do not provide all the desired features when weapon training. That is the simulated weapon does not recoil. Weapon training with simulated weapons are thus not realistic.

It is therefore conceivable to assume that a market incentive exists to remove the mentioned limitations one way or the other. However, despite this incentive, and despite prior attempts to overcome problems relating to weapon training there is still a need for a solution for weapon training, which solution overcome or at least mitigates one of the above problems.

### SUMMARY OF THE INVENTION

It is therefore an object of the present invention to alleviate the above limitations. This object is attained by a recoil generator arrangement configured to generate a recoil or hammer cocking in a weapon comprising a barrel or barrel replica. The recoil generator arrangement comprises a cylinder, a piston movably arranged in the cylinder and an oblong element arranged on the piston. A weapon comprising such a recoil generator arrangement has already been proposed in EP 1 243 889 A1. However, according to the present invention, the cylinder is removable attachable on a front end of the weapon so that the oblong element extends from the front end through the barrel or barrel replica to an element inside the weapon, and moves the element when the piston is moved.

Thus, an object of the present invention is achieved by moving the element fast and so that the element is stopped by an inside part of the weapon. The fast moving element that is stopped by an inside part of the weapon creates a recoil or hammer cocking of the weapon. The recoil or hammer cocking is thus created in a similar way as when the weapon is fired with sharp ammunition.

One of the main advantages of the present invention is the solution to the previously mentioned shortcomings. The invention eliminates the problem of using simulated weapon or weapons without ammunition that does not recoil. Thus weapon training with the recoil generator arrangement according to the present invention becomes more realistic than weapon training with simulated weapons, or with weapons without ammunition.

### BRIEF DESCRIPTION OF THE DRAWINGS

Objects, advantages and effects as well as features of the invention will be more readily understood from the following detailed description of exemplary embodiments of the invention when read together with the accompanying drawings, in which:
Figure 1 schematically illustrates an arrangement for generating recoil or hammer cocking according to an exemplary embodiment of the present invention.
Figure 2 schematically illustrates an arrangement for generating recoil or hammer cocking according to another exemplary embodiment of the present invention.

### DETAILED DESCRIPTION

In the following description, for purposes of explanation and not limitation, specific details are set forth, such as device configurations in order to provide a thorough understanding of the present invention. It will be apparent to one skilled in the art that the present invention may be carried out in other embodiments that depart from these specific details.

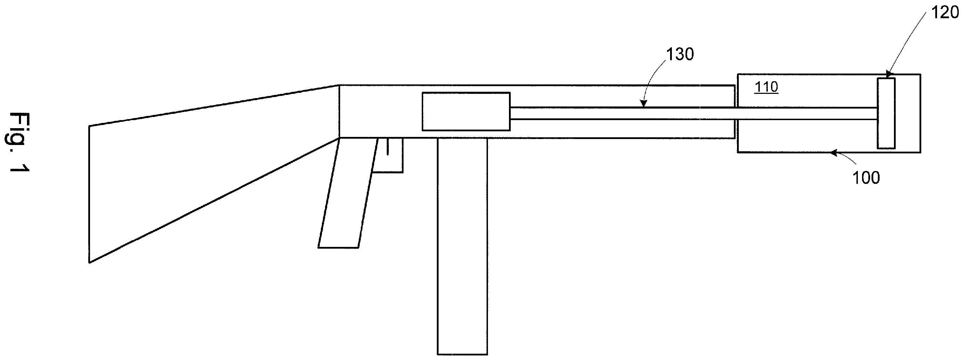

Referring to figure 1 there is illustrated a recoil generator arrangement 100 configured to generate a recoil or hammer cocking in a weapon comprising a barrel or barrel replica. The recoil generator arrangement 100 can be used on an A47 but the recoil generator arrangement 100 can also be used on several other types of weapons. The recoil generator arrangement 100 comprises a cylinder 110. The cylinder 100 is preferably made of metal but can also be made of different types of plastic materials or other materials. Further a piston 120 is movably arranged in the cylinder. The piston 120 is preferably made of metal but can also be made of different types of plastic materials or other materials. Yet further is an oblong element 130 arranged on the piston 120. The cylinder 110 is attachable on a front end of the weapon so that the oblong element 130 extends from the front end through the barrel or barrel replica to an element inside the weapon, and moves the element when the piston 120 is moved. In one exemplary embodiment of the recoil generator arrangement 100 according to the present invention is the element a bolt replica. The element can also be a bolt of the weapon or other part of the weapon.

In one exemplary embodiment of the recoil generator arrangement 100 according to the present invention is the piston 120 moved with compressed gas. In another exemplary embodiment of the recoil generator arrangement 100 according to the present invention is the piston 120 moved by electromagnetic means.

As mention before since the cylinder 110 is attachable on a front end of the weapon so that the oblong element 130 extends from the front end through the barrel or barrel replica to an element inside the weapon, the element is moved when the piston 120 is moved. By moving the element fast and so that the element is stopped by an inside part of the weapon a recoil or hammer cocking is created. The recoil or hammer cocking is thus created by the element hitting an inside part the weapon. The recoil or hammer cocking is thus created in a similar way as when the weapon is fired with sharp ammunition. According to the invention, the cylinder 110 is removable attachable and can, therefore, be removed after weapon training so that the weapon can be used with sharp ammunition. The cylinder 110 can be attachable on a silencer mount of the weapon, but cylinder 110 can also be mounted in other ways on the front end of the weapon.

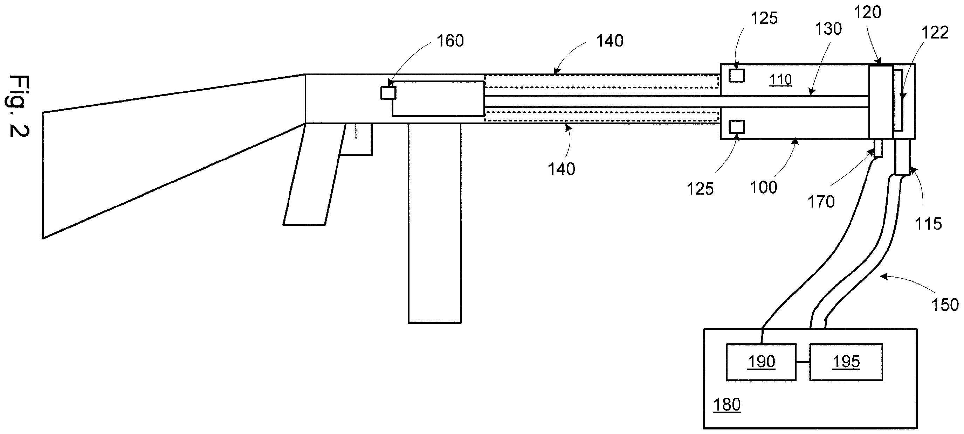

Referring to figure 2, the recoil generator arrangement 100 according to the present invention, where the piston 120 is moved with compressed gas, the cylinder 110 comprises an air inlet 115 on one side of the piston 120 and one or several holes 125 for letting out air on the opposite side. In this exemplary embodiment is a hose or a pipe 150 connected between the air inlet and a module 180 with compressed air supply (not shown) and a solenoid valve (not shown).

The piston 120 in the recoil generator arrangement 100 according to the present invention may comprise a shock absorbing material 122 on a front and/or a back end of the piston. The shock absorbing material absorbs the shock when the piston hits one or both ends of the cylinder 110.

In one exemplary embodiment of the recoil generator arrangement 100 according to the present invention is the oblong element 130 attached to the element. In other exemplary embodiments of the recoil generator arrangement 100 according to the present invention the oblong element 130 lies against the element. In the recoil generator arrangement 100 according to the present invention can the oblong element 130 be a rod or a pipe, but the oblong element can also be of other shapes. The oblong element 130 can also be a pipe with hydraulic or pneumatic medium.

The recoil generator arrangement 100 according to the present invention may comprising a protective pipe 140 arranged inside the barrel. The protective pipe 140 protects the barrel from the oblong element 130 so that the barrel does not become scratched when the oblong element 130 moves back and forth inside the barrel.

The recoil generator arrangement 100 can also comprise at least one sensor 160 for sensing the position of the element or a trigger of the weapon. The at least one sensor 160 can be a Hall sensor or other type of sensor capable of sensing an electromagnetic field change. The at least one sensor 160 can for instance be arranged to sense when the trigger is pulled and/or when the element reaches a specific position.

Further, the recoil generator arrangement 100 can in an exemplary embodiment comprise an electrical connection means 170. The electrical connection means can be used for connecting wires between the recoil generator arrangement 100 and a module 180 or another device. The module 180 further comprises communications means 190 for communicating with one or several of the sensors 160 via the electrical connection means 170. The module 180 can further comprise processing means 195 connected to the communications means 190 and configured to control the solenoid valve 155 so that compressed air is supplied to the cylinder 110 at the rights times in order to move the piston 120 in the cylinder 110.

Yet further, the recoil generator arrangement 100 can in another exemplary embodiment comprise a valve for controlling air supply to the cylinder, wherein the valve is controlled by a trigger of the weapon.

The detailed description is of the best mode presently contemplated for practicing the present invention. It is not intended to be taken in a limiting sense, but is made merely for the purpose of describing general principles. The scope of the invention is to be ascertained with reference to the issued claims.

## Claims

1. A weapon comprising a barrel or barrel replica and a recoil generator arrangement (100) configured to generate a recoil or hammer cocking, said recoil generator arrangement comprising;
- a cylinder (110);
- a piston (120) movably arranged in said cylinder;
- an oblong element (130) arranged on said piston;
**characterized in that** said cylinder (110) is removable attachable on a front end of said weapon so that said oblong element (130) extends from said front end through the barrel or barrel replica to an element inside the weapon, and moves said element when said piston is moved.

2. The weapon according to claim 1, wherein said piston (120) is moved with compressed gas.

3. The weapon according to claim 1, wherein said piston (120) is moved by electromagnetic means.

4. The weapon according to claim 2, wherein said cylinder (110) comprises an air inlet (115) on one side of the piston (120) and one or several holes (125) for letting out air on the opposite side.

5. The weapon according to any of claims 1 to 4, wherein said piston comprises a shock absorbing material (122) on a front and/or a back end of the piston.

6. The weapon according to any of claims 1 to 5, wherein said oblong element (130) is a rod.

7. The weapon according to any of claims 1 to 5, wherein said oblong element (130) is a pipe with hydraulic or pneumatic medium.

8. The weapon according to any of claims 1 to 7, wherein said cylinder (110) is attachable on a silencer mount of the weapon.

9. The weapon according to any of claims 1 to 8, wherein the recoil generator arrangement (100) further comprising a protective pipe (140) arranged inside said barrel.

10. The weapon according to any of claims 1 to 9, wherein said oblong element (130) is attached to said element.

11. The weapon according to any of claims 1 to 10, wherein said element is a bolt replica.

12. The weapon according to any of claims 1 to 11, wherein said element is a bolt of the weapon

13. The weapon according to claim 4-12, wherein a hose or a pipe (150) is connected between said air inlet and a compressed air supply.

14. The weapon according to any of claims 4-13, where a hose or a pipe (150) is connected between said air inlet and a module comprising a compressed air reservoir and a solenoid valve (155).

15. The weapon according to any of claims 1 to 14, wherein said recoil generator arrangement (100) further comprising, at least one sensor (160) for sensing the position of the element or a trigger of the weapon.

## Patentansprüche

1. Waffe, die einen Lauf oder eine Laufreplik und eine Rückstoßerzeugungsanordnung (100) umfasst, die dazu ausgelegt ist, einen Rückstoß oder eine Hahnspannung zu erzeugen, wobei die Rückstoßerzeugungsanordnung umfasst;
- einen Zylinder (110);
- einen im Zylinder beweglich angeordneten Kolben (120);
- ein am Kolben angeordnetes längliches Element (130);
**dadurch gekennzeichnet, dass** der Zylinder (110) an einem Vorderende der Waffe abnehmbar befestigbar ist, so dass das längliche Element (130) sich vom Vorderende durch den Lauf oder die Laufreplik zu einem Element innerhalb der Waffe erstreckt und beim Bewegen des Kolbens das Element bewegt.

2. Waffe nach Anspruch 1, wobei der Kolben (120) mit Druckgas bewegt wird.

3. Waffe nach Anspruch 1, wobei der Kolben (120) durch elektromagnetische Mittel bewegt wird.

4. Waffe nach Anspruch 2, wobei der Zylinder (110) einen Lufteinlass (115) auf einer Seite des Kolbens (120) und ein oder mehrere Löcher (125) zum Auslassen von Luft auf der gegenüberliegenden Seite umfasst.

5. Waffe nach einem der Ansprüche 1 bis 4, wobei der Kolben ein stoßdämpfendes Material (122) an einem vorderen und/oder einem hinteren Ende des Kolbens umfasst.

6. Waffe nach einem der Ansprüche 1 bis 5, wobei das längliche Element (130) eine Stange ist.

7. Waffe nach einem der Ansprüche 1 bis 5, wobei das längliche Element (130) ein Rohr mit hydraulischem oder pneumatischem Medium ist.

8. Waffe nach einem der Ansprüche 1 bis 7, wobei der Zylinder (110) an einer Schalldämpferhalterung der Waffe befestigbar ist.

9. Waffe nach einem der Ansprüche 1 bis 8, wobei die Rückstoßerzeugungsanordnung (100) ferner ein innerhalb des Laufs angeordnetes Schutzrohr (140) umfasst.

10. Waffe nach einem der Ansprüche 1 bis 9, wobei das längliche Element (130) am Element befestigt ist.

11. Waffe nach einem der Ansprüche 1 bis 10, wobei das Element eine Bolzenreplik ist.

12. Waffe nach einem der Ansprüche 1 bis 11, wobei das Element ein Bolzen der Waffe ist.

13. Waffe nach den Ansprüchen 4 bis 12, wobei ein Schlauch oder ein Rohr (150) zwischen dem Lufteinlass und einer Druckluftversorgung verbunden ist.

14. Waffe nach den Ansprüchen 4 bis 13, wobei ein Schlauch oder ein Rohr (150) zwischen dem Lufteinlass und einem einen Druckluftbehälter und ein Solenoidventil (155) umfassenden Modul verbunden ist.

15. Waffe nach einem der Ansprüche 1 bis 14, wobei die Rückstoßerzeugungsanordnung (100) ferner mindestens einen Sensor (160) zum Erfassen der Position des Elements oder eines Abzugshahns der Waffe umfasst.

## Revendications

1. Arme comprenant un canon ou une réplique de canon et un dispositif générateur de recul (100) configuré pour générer une armure de recul ou de marteau, ledit dispositif générateur de recul comprenant ;
- un cylindre (110) ;
- un piston (120) disposé de manière mobile dans ledit cylindre ;
- un élément oblong (130) agencé sur ledit piston ;
**caractérisée en ce que** ledit cylindre (110) peut être fixé de manière détachable sur une extrémité avant de ladite arme si bien que ledit élément oblong (130) s'étend depuis ladite extrémité avant à travers le canon ou la réplique de canon jusqu'à un élément à l'intérieur de l'arme, et déplace ledit élément lorsque le piston est déplacé.

2. Arme selon la revendication 1, dans laquelle ledit piston (120) est déplacé avec du gaz comprimé.

3. Arme selon la revendication 1, dans laquelle ledit piston (120) est déplacé par des moyens électromagnétiques.

4. Arme selon la revendication 2, dans laquelle ledit cylindre (110) comprend une entrée d'air (115) d'un côté du piston (120) et un ou plusieurs trous (125) pour évacuer l'air du côté opposé.

5. Arme selon l'une quelconque des revendications 1 à 4, dans laquelle ledit piston comprend un matériau absorbant les chocs (122) sur une extrémité avant et / ou arrière du piston.

6. Arme selon l'une quelconque des revendications 1 à 5, dans laquelle ledit élément oblong (130) est une tige.

7. Arme selon l'une quelconque des revendications 1 à 5, dans laquelle ledit élément oblong (130) est un tuyau à fluide hydraulique ou pneumatique.

8. Arme selon l'une quelconque des revendications 1 à 7, dans laquelle ledit cylindre (110) peut être fixé sur un support de silencieux de l'arme.

9. Arme selon l'une quelconque des revendications 1 à 8, dans laquelle ledit dispositif générateur de recul (100) comprend en outre un tuyau de protection (140) disposé à l'intérieur dudit canon.

10. Arme selon l'une quelconque des revendications 1 à 9, dans laquelle ledit élément oblong (130) est fixé audit élément.

11. Arme selon l'une quelconque des revendications 1 à 10, dans laquelle ledit élément est une réplique de boulon.

12. Arme selon l'une quelconque des revendications 1 à 11, dans laquelle ledit élément est un boulon de l'arme.

13. Arme selon les revendications 4 à 12, dans laquelle un tuyau ou un tube (150) est connecté entre ladite entrée d'air et une alimentation en air comprimé.

14. Arme selon l'une quelconque des revendications 4 à 13, dans laquelle un tuyau ou un tube (150) est connecté entre ladite entrée d'air et un module comprenant un réservoir d'air comprimé et une vanne solénoïde (155).

15. Arme selon l'une quelconque des revendications 1 à 14, dans laquelle ledit dispositif générateur de recul (100) comprend en outre au moins un capteur (160) pour détecter la position de l'élément ou d'un déclencheur de l'arme.
